Europäisches Patentamt

European Patent Office

Office européen des brevets

(11) Numéro de publication: **0 192 518**
**A1**

## (12) DEMANDE DE BREVET EUROPEEN

(21) Numéro de dépôt: **86400141.7**

(22) Date de dépôt: **24.01.86**

(51) Int. Cl.⁴: **C 09 D 5/18**

(30) Priorité: **24.01.85 FR 8500990**

(43) Date de publication de la demande:
**27.08.86 Bulletin 86/35**

(84) Etats contractants désignés:
**AT BE CH DE FR GB IT LI LU NL SE**

(71) Demandeur: **JIVAL S.A.**
**7 rue Eugène Hénaff**
**F-94405 Vitry Cedex(FR)**

(72) Inventeur: **Quintin née Duvergey, Mauricette**
**15 rue du 8 mai 1945**
**F-92250 La Garenne Colombes(FR)**

(74) Mandataire: **Pinguet, André**
**CAPRI 28 bis, avenue Mozart**
**F-75016 Paris(FR)**

(54) Peinture intumescente.

(57) Une peinture intumescente comportant quatre agents d'intumescence : un polyphosphate monoammonique, mélamine base, pentaérithryte, dicyane diamide; un liant, mélange de deux polymères acryliques et de paraffine chlorée; un solvant, mélange de xylène et d'essence F; un agent de protection, le borate de zinc; éventuellement un pigment, le titane. Les proportions de dicyane diamide et des deux polymères acryliques du liant sont respectivement environ 1,5 % et environ 10 à 12 % en poids. Les proportions relatives de polyphosphate monoammonique, de mélamine base, de pentaérithryte sont environ 1/2, 1/4, 1/4.

EP 0 192 518 A1

Croydon Printing Company Ltd.

1.

L'objet de la présente invention est une peinture intumescente.

Les peintures intumescentes sont des peintures qui se développent en une meringue incombustible sur le support où elles ont été étendues, sous l'effet de la chaleur. Cette meringue constitue un isolant thermique, équivalent à un isolant minéral spongieux, qui retarde les effets de la chaleur sur son support, le flambage par exemple, quand ce support est une poutre métallique.

Ce type de peinture est utilisé dans toutes sortes d'installations, de locaux, en particulier dans ceux qui accueillent des personnes, car il est un auxiliaire de la lutte contre l'incendie: en retardant l'écroulement des structures sur lesquelles il a été étendu, il permet l'évacuation des personnes et facilite l'intervention des pompiers.

Il est connu de fabriquer des peintures intumescentes. Ces peintures comportent des agents d'intumescence, un liant et un solvant. Dans la peinture intumescente commercialisée sous le nom de PI 246 par la société JIVAL la

0192518

nature et la teneur de ces différents constituants sont les suivantes :

- agents d'intumescence :. un polyphosphate monoammonique stabilisé ou non
  . mélamine base en poudre
  . pentaérithryte

- Les proportions relatives de ces trois agents sont environ 1/3, 1/3, 1/3 et ils représentent à peu près 70 % de la peinture en poids.

- Liant : mélange d'une résine acrylique et d'un plastifiant chloré représentant respectivement à peu près 18 % et 6 % de la peinture en poids.

- Solvant : White Spirit, essence F par exemple, représentant environ 6 % de la peinture en poids.

A ces constituants de base on peut ajouter un pigment, mais en très petite dose, sinon la meringue ne lève pas. Parmi les constituants énumérés ci-dessus, ce sont naturellement les agents d'intumescence qui provoquent la croissance de la meringue par leur développement sous l'effet de la chaleur : la mélamine et le polyphosphate monoammonique notamment dégagent des gaz qui engendrent une structure spongieuse. Les gaz dégagés par le polyphosphate monoammonique ont en outre comme effet d'arrêter la propagation de la flamme. Ces trois agents d'intumescence ont été choisis en raison de l'échelonnement de leur température de développement respective. Au fur et à mesure que la température croît, ils se développent successivement et assurent ainsi une croissance de la meringue progressive et harmonieuse. Avec une peinture contenant les composants énumérés ci-dessus, dans les mêmes proportions, la meringue se forme entre 200°C et 300°C, joue son rôle d'isolant thermique jusqu'à 800°C et a une épaisseur d'environ 5 cm, si la peinture a été étendue à raison de 2 kg au $m^2$. Selon les normes du C.S.T.B., cette peinture assure une protection efficace en cas d'incendie pendant un peu moins d'une heure.

L'objet de la présente invention est une peinture intumescente assurant un isolant thermique pendant un temps beaucoup plus long pouvant aller jusqu'à deux heures.

La peinture intumescente selon l'invention comporte :

- quatre agents d'intumescence :. un polyphosphate monoammonique
  - mélamine base en poudre
  - pentaérithryte
  - dicyane diamide
- un liant : mélange de deux polymères acryliques et d'un plastifiant ,en l'occurrence la paraffine chlorée
- un solvant : mélange de xylène et d'essence F
- un pigment (éventuel) : dioxyde de titane
- un agent de protection: borate de zinc.

Selon une caractéristique de l'invention, la proportion de ces constituants, par rapport au poids total, est la suivante :

- polyphosphate monoammonique, mélamine base, pentaérithryte : environ 46,5 à 55,5 %
- dicyane diamide : environ 1,5 %
- polymères acryliques : environ 10 à 12 %
- paraffine chlorée : environ 8 à 10 %
- xylène, essence F : environ 20 à 25 %.
- dioxyde de titane : environ 5 %
- borate de zinc : environ 1 %.

Selon une autre caractéristique de l'invention les proportions relatives de polyphosphate monoammonique, de mélamine base, de pentaérithryte sont environ 1/2,1/4,1/4 et les proportions relatives de xylène et d'essence F sont environ 1/2, 1/2.

L'efficacité accrue de la peinture selon l'invention, par rapport aux peintures connues, tient essentiellement à l'adjonction d'un élément d'intumescence, le dicyane diamide, à la nature de certains des éléments entrant dans la composition du solvant, les deux polymères acryliques, à la modification de la quantité d'agents d'intumescence et de liant par rapport au poids total, à la modification des proportions relatives du polyphosphate monoammonique, de mélamine base, de pentaérithryte. En particulier,l'adjonction d'un quatrième agent d'intumescence, le dicyane diamide, qui se développe à une température de 375°C, permet d'obtenir une croissance plus régulière de la meringue et plus étagée dans le temps.

La présente invention n'est pas limitée aux exemples de réalisation qui viennent d'être décrits,elle est au contraire susceptible de modifications et de variantes qui apparaîtront à l'homme de l'art.

REVENDICATIONS

1 - Peinture intumescente constituée par le mélange d'agents d'intumescence, d'un solvant et éventuellement d'un pigment, caractérisée en ce que les agents d'intumescence sont un polyphosphate monoammonique , la mélamine base, le pentaérythrite et le dicyane diamide.

2 - Peinture intumescente selon la revendication 1 , caractérisée en ce qu'elle comporte un agent de protection, le borate de zinc.

3 - Peinture intumescente selon l'une des revendications 1 ou 2, caractérisée en ce que le liant comporte un mélange de deux polymères acryliques et de paraffine chlorée.

4 - Peinture intumescente selon l'une des revendications précédentes,caractérisée en ce que le solvant est un mélange de xylène et d'essence F.

5 - Peinture intumescente selon la revendication 1, caractérisée en ce qu'elle comporte environ 1,5 % de dicyane diamide en poids.

6 - Peinture intumescente selon la revendication 2, caractérisée en ce qu'elle comporte environ 1 % de borate de zinc en poids.

7 - Peinture intumescente selon la revendication 3, caractérisée en ce qu'elle comporte environ 10 à 12 % de polymères acryliques en poids.

8 - Peinture intumescente selon la revendication 3, caractérisée en ce qu'elle comporte environ 8 à 10 % de paraffine chlorée en poids.

9 - Peinture intumescente selon la revendication 4, caractérisée en ce qu'elle comporte environ 20 à 25 % de xylène et d'essence F en poids.

10. - Peinture intumescente selon la revendication 1 , caractérisée en ce qu'elle comporte environ 5 % de pigment en poids.

11 - Peinture intumescente selon l'une des revendications précédentes, caractérisée en ce que le polyphosphate monoammonique, la mélamine base, le pentaérithryte représentent environ 46,5 à 55,5 % du poids total.

12 - Peinture intumescente selon la revendication 3, caractérisée en ce que les proportions relatives de xylène et d'essence F sont environ 1/2, 1/2.

13 - Peinture intumescente selon l'une des revendications précédentes, caractérisée en ce que les proportions relatives de polyphosphate monoammonique , de mélamine base,de pentaérithryte sont environ 1/2, 1/4, 1/4.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl 4) |
|---|---|---|---|
| X | CHEMICAL ABSTRACTS, vol. 94, 1981, page 87, no. 141310d, Columbus, Ohio, US; & PL - A - 104 007 (INSTYTUT PRZEMYSLU TWORZYW I FARB, GLIWICE) 20-11-1980 * Abrégé * | 1 | C 09 D 5/18 |
| X | DE-A-2 040 147 (ROLLS-ROYCE) * Page 6, revendication 1; page 5, exemple * | 1 | |
| X | FR-A-2 253 069 (HOECHST) * Page 10, revendications 1,7,8 * | 1 | |
| A | US-A-3 639 299 (K.R. McDOWALL) * Colonne 9, revendications 1-3 * | 1,2 | |
| A | US-A-2 956 037 (J.M. VENABLE) * Revendication 1; exemples 5-7 * | 1 | DOMAINES TECHNIQUES RECHERCHES (Int. Cl.4) C 09 D 5/18 |
| A | US-A-3 284 216 (B.B. KAPLAN) * Colonne 5, exemple 5 * | 1 | |
| A | US-A-3 925 137 (M. KAMEI) * Abrégé * | 1 | |

Le présent rapport de recherche a été établi pour toutes les revendications

| Lieu de la recherche | Date d'achèvement de la recherche | Examinateur |
|---|---|---|
| LA HAYE | 06-05-1986 | GIRARD Y.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82